# EUROPEAN PATENT SPECIFICATION

(11) **EP 0 699 849 B1**
(45) Date of publication and mention of the grant of the patent: **10.12.1997**
(21) Application number: 95107175.2
(22) Date of filing: 11.05.1995
(51) Int. Cl.: F16H 7/24, F01L 1/02

(54) **Timing chain mounting device for engine**
Vorrichtung zur Montage einer Steuerkette einer Brennkraftmaschine
Dispositif pour le montage d'une chaîne de distribution de moteur

(30) Priority: 24.08.1994 JP 199834/94
(43) Date of publication of application: 06.03.1996
(73) Proprietor: SUZUKI KABUSHIKI KAISHA, Hamamatsu-Shi, Shizuoka-Ken (JP)
(72) Inventor: Sonoda, Yuji, Hamamatsu-Shi, Shizuoka-Ken (JP)
(74) Representative: Klunker . Schmitt-Nilson . Hirsch

(56) References cited:
- US-A- 3 386 301
- US-A- 3 550 465
- US-A- 5 031 591

## Description

The present invention relates to a timing chain mounting device for an engine according to the preamble of claim 1. US-A-5,031,591 discloses a device of this type. This prior art device is used for a vertical crankshaft engine. Means are provided to prevent dropping down of the timing belt in the direction of the shaft (vertikal direction).

A four-stroke cycle engine for a vehicle such as scooter is generally provided with a valve actuating mechanism. The valve actuating mechanism has a cam shaft having one end on which a cam sprocket is mounted, and the cam sprocket is linked with a chain drive sprocket mounted on a crank shaft through a timing chain. The rotation of the crank shaft is transmitted to the cam shaft through the timing chain, thereby actuating the valve actuating mechanism.

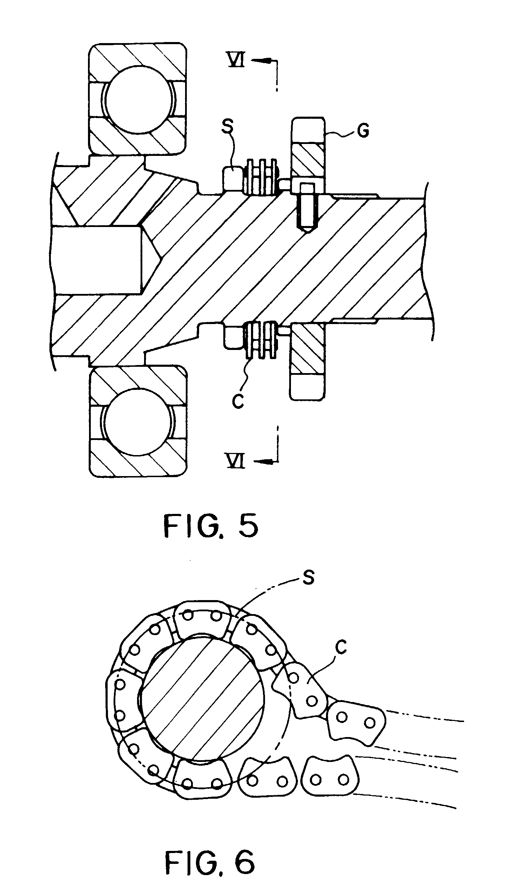

However, in an engine unit having a cylinder having a large forward inclination in which the cylinder is horizontally arranged, as shown in Figs. 5 and 6, when a timing chain C is disengaged from the chain drive sprocket S, there may cause a case where the timing chain C is dropped down in a space between the chain drive sprocket S and an auxiliary mechanism drive gear G adjacent to the sprocket S. The timing chain C hence dangles and it becomes difficult for the timing chain to be moved horizontally. In order to again mount or engage the timing chain C to the chain drive sprocket S, it becomes necessary to use a driver having a long shank, thus being inconvenient for a worker and providing less workability.

Furthermore, since the chain drive sprocket S is located in a deep and dark portion of a timing chain chamber, it is hard to see the chain drive sprocket S, which requires a use of an electric lamp or the like to perform the working.

US-A-3 550 465 discloses a chain fall preventing device for a bicycle, in which a circular plate having a slanted circumferential edge is disposed between a first and a second chain sprocket of a speed changing mechanism. In any engine having a valve actuating mechanism, however, there is not provided a mechanism for switching over a chain between a first great sprocket and a second small sprocket. During operation, the timing chain constantly meshes with the chain drive sprocket.

An object of the present invention is to substantially eliminate defects or drawbacks encountered in the prior art and to provide an timing chain mounting device for an engine unit capable of improving a mounting workability thereof.

This and other objects can be achieved according to the present invention by providing a timing chain mounting device having the features of claim 1.

In a preferred embodiment, a timing chain mounting member is mounted on the crank shaft adjacent to the chain drive sprocket and the guide boss is formed to the timing chain mounting member on the side of the chain drive sprocket. The guide boss will be formed integrally with a side surface of the timing chain mounting member on the side of the chain drive sprocket.

The timing chain mounting member is an auxiliary mechanism driving gear mounted to the crank shaft.

According to the characters and structures of the present invention described above, since, in an engine in which a valve actuating mechanism is driven through a timing chain by means of a chain drive sprocket mounted on a crank shaft, a guide boss is disposed adjacent to the chain drive sprocket and the guide boss is provided with an inclination surface inclined downward toward an outer peripheral edge of the chain drive sprocket and since an auxiliary mechanism driving gear is mounted on the crank shaft adjacent to the chain drive sprocket, and the guide boss is formed integrally or in an integral manner with a side surface of the auxiliary mechanism driving gear on the side of the chain drive sprocket, the mounting workability of the timing chain can be improved.

### BRIEF DESCRIPTION OF THE DRAWINGS

The present invention will be made more clear from the following descriptions with reference to the accompanying drawings, in which:
Fig. 1 is a horizontal sectional view of a four-stroke cycle single cylinder engine unit for a scooter type vehicle provided with one embodiment of an engine timing chain mounting device according to the present invention;
Fig. 2 is an enlarged view showing a crank shaft and its associated portion;
Fig. 3 is an enlarged sectional view showing a portion near a chain drive sprocket;
Fig. 4 is a sectional view taken along the line IV-IV in Fig. 3;
Fig. 5 is an enlarged sectional view showing a portion near a conventional chain drive sprocket; and
Fig. 6 is a sectional view taken along the line VI-VI in Fig. 5;

### DESCRIPTION OF THE PREFERRED EMBODIMENT

Hereunder, an embodiment of the present invention will be described with reference to the accompanying drawings.

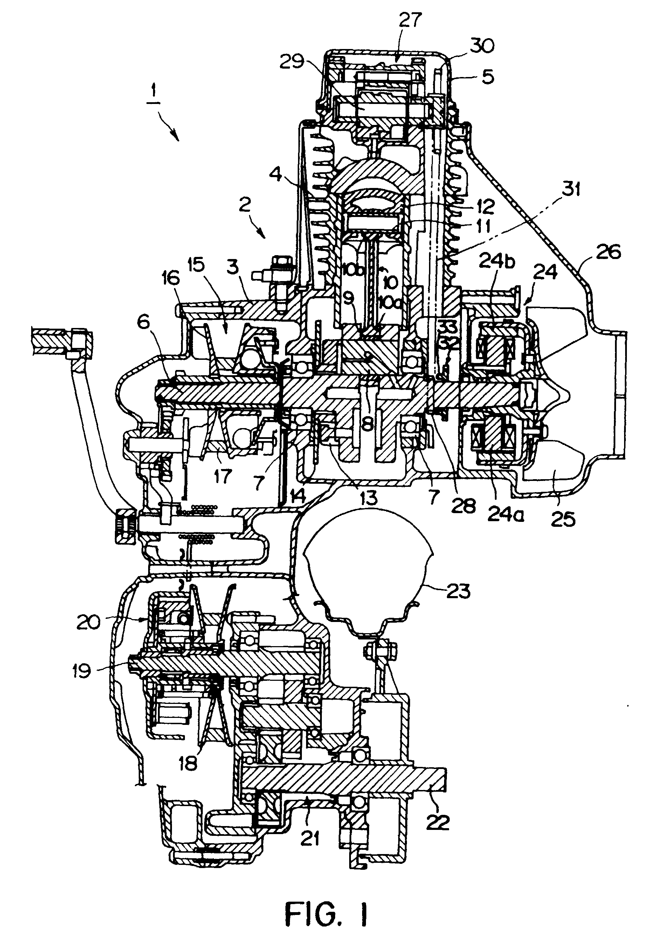

Fig. 1 is a horizontal sectional view of one example of a four-stroke cycle single cylinder engine unit for a scooter type vehicle, for example, to which the present invention is applied.

As shown in Fig. 1, an engine 2 is mounted to a front portion of an engine unit 1. The engine 2 essentially comprises a crank case 3, cylinder 4 and a cylinder head 5. The cylinder 4 is arranged, for example, horizontally.

In the crank case 3, a crank shaft 6 is arranged with right angle with respect to an advancing direction of a scooter vehicle and is supported in the crank case 3 by means of a pair of bearings. The crank shaft 6 is composed of bilaterally divided two portions which are connected through a crank pin 8 so as to provide an integral structure.

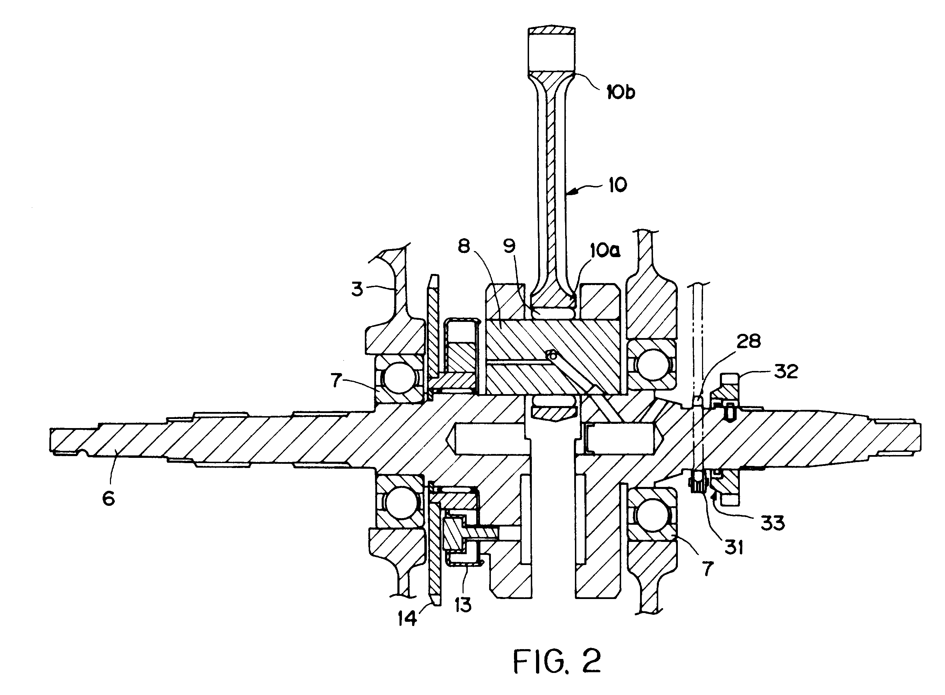

Fig. 2 is an enlarged sectional view showing the crank shaft 6 and its associated portions. As shown in Figs. 1 and 2, A larger end portion 10a of a connection rod 10 is connected to the crank pin 8 through a bearing 9, and another end portion 10b, smaller than the end portion 10a, of the connection rod 10 is connected to a piston 12 through a piston pin 11. The piston 12 reciprocates in the cylinder 4 and the reciprocating stroke of the piston 12 is transmitted to the crank shaft 6 by way of the connection rod 10, thereby rotating the crank shaft 6.

A starter clutch 13 is mounted to the crank shaft 6 on the left side, as viewed in Fig. 2, of the crank pin 8. A starter gear 14 is provided for the starter clutch 13 and the starter gear 14 is meshed with a drive gear of a starter motor, not shown, through an idle gear, also not shown. The starter clutch 13 serves to transmit a driving power of the starter motor to the crank shaft 6 at the starting time of the engine 2, and after the starting of the engine driving, the power transmission is automatically interrupted.

As shown in Fig. 1, on the left end side of the crank shaft 6, a drive pulley 16 of a V-belt type automatic speed changing mechanism 15 is mounted so as to transmit the rotational force of the engine 2 to a driven pulley 18 through a V-belt 17. The driven pulley 18 is supported to be rotatably to a driven shaft 19 disposed to a rear portion of the engine unit 1, and the rotational force of the engine 2 transmitted to the driven pulley 18 is then transmitted to the driven shaft 19 through a centrifugal clutch mechanism 20. The driven shaft 19 is connected to a rear accelerator 22 by way of a transmission mechanism 21 which serves as speed reduction gear mechanism and power transmission mechanism, thereby rotational force of the engine 2 being transmitted to a rear wheel 23 through this transmission mechanism 21.

On the other hand, on the right end side of the crank shaft 6 in Fig. 1, there are disposed an alternator 24 constituting a portion of a charging device and a cooling fan 25 constituting a portion of an engine cooling device. The alternator 24 comprises a flywheel magnet 24a and a stator 24b, and when the stator 24b secured to the crank shaft 6 is rotated, an electrical power is generated and then transmitted to various portions of the vehicle.

The cylinder 4 and the cooling fan 25 of the engine 2 are covered by a cowling 26. In the engine 2, the cylinder 4 and its associated portions are cooled by introducing an outer air into the cowling 26 by driving the cooling fan 25 connected to the crank shaft 6.

A valve actuating mechanism 27 is disposed in the cylinder head 5, and a chain drive sprocket 28 is mounted on the crank shaft 6 at a portion between the bearing 7 supporting the crank shaft 6 and the alternator 24. The valve actuating mechanism 27 includes a cam shaft 29 having one end to which is mounted a cam sprocket 30, which is operatively coupled to the chain drive sprocket 28 through a timing chain 31. Thus, the valve actuating mechanism 27 is operated by the rotation of the crank shaft 6 transmitted to the cam shaft 29 through the timing chain 31.

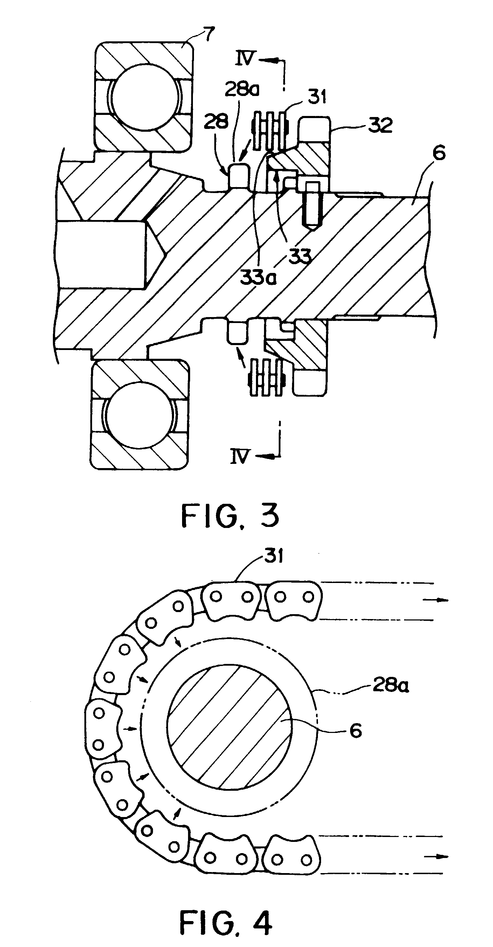

Fig. 3 is an enlarged sectional view of the chain drive sprocket 28 and its associated portions. As shown in Figs. 2 and 3, a gear 32 for driving an auxiliary mechanism is disposed adjacent to the chain drive sprocket 28 on the right side thereof. That is, the auxiliary mechanism driving gear 32 is mounted on the crank shaft adjacent to the chain drive sprocket 28. As the auxiliary mechanism, an oil pump, a balancer, or the like will be considered. A guide boss 33 is provided integrally or in an integral manner with the side surface of the auxiliary mechanism driving gear 32 on the side of the chain drive sprocket 28. The guide boss 33 has a surface 33a inclining downward toward the outer peripheral edge 28a of the chain drive sprocket 28. The integral formation of the guide boss 33 to the auxiliary mechanism driving gear 32 will be preferably through a molding process.

The present embodiment will operates as follows.

Because the guide boss 33 having the surface 33a inclining downward toward the outer peripheral edge 28a of the chain drive sprocket 28 is formed on the side surface of the auxiliary mechanism driving gear 32 provided adjacent to the chain drive sprocket 28 on the side thereof, as shown in Figs. 3 and 4, when the timing chain 31 is mounted, the timing chain 31 slides down on the inclining surface 33a of the guide boss 33, thereby easily mounting it to the chain drive sprocket 28.

Furthermore, once after the timing chain 31 has been mounted to the chain drive sprocket 28, the timing chain 31 never drop down in the space between the chain drive sprocket 28 and the auxiliary mechanism driving gear 32 adjacent to the sprocket 28.

As described hereinbefore, according to the timing chain mounting device of the present invention, since, in an engine in which a valve actuating mechanism is driven through a timing chain by means of a chain drive sprocket mounted on a crank shaft, a guide boss is disposed adjacent to the chain drive sprocket and the guide boss is provided with a surface inclined downward toward an outer peripheral edge of the chain drive sprocket and since an auxiliary mechanism driving gear is mounted on the crank shaft adjacent to the chain drive sprocket and the guide boss is formed integrally or in an integral manner with a side surface of the auxiliary mechanism driving gear on the side of the chain drive sprocket, the mounting workability of the timing chain can be improved.

In the present invention, as described above, the guide boss 33 is integrally formed with the auxiliary mechanism driving gear 32, but in a modification, it will be considered that a certain member as a timing chain mounting guide member provided with the guide boss of the structure described above may be mounted to the crank shaft adjacent to the chain drive sprocket 28. As such modified timing chain mounting guide member, a primary drive gear may be considered.

## Claims

1. A timing chain mounting device of an engine (2), in which a valve actuating mechanism (27) is driven through a timing chain (31) by means of a chain drive sprocket (28) mounted on a crank shaft (6), the timing chain mounting device being characterized in that a guide boss (33) is disposed adjacent to said chain drive sprocket (28) and said guide boss (33) is provided with a surface (33a) inclined downward toward an outer peripheral edge of said chain drive sprocket (28).

2. A timing chain mounting device according to claim 1, wherein a timing chain mounting member (32) is mounted on said crank shaft (6) adjacent to said chain drive sprocket (28) and said guide boss (33) is formed to the timing chain mounting member (32) on the side of the chain drive sprocket (28).

3. A timing chain mounting device according to claim 2, wherein said guide boss (33) is integrally formed with a side surface of the timing chain mounting member (32) on the side of the chain drive sprocket (28).

4. A timing chain mounting device according to claim 2, wherein said timing chain mounting member is an auxiliary mechanism driving gear (32) mounted to the crank shaft (6).

## Patentansprüche

1. Steuerkettenmontageeinrichtung für einen Motor (2), bei dem ein Ventilbetätigungsmechanismus (27) über eine Steuerkette (31) durch ein Kettenrad (28) angetrieben wird, welches auf einer Kurbelwelle (6) gelagert ist, **dadurch gekennzeichnet**, daß sich neben dem Kettenrad (28) ein Führungsvorsprung (33) befindet, der mit einer Oberfläche (33a) ausgestattet ist, welche nach unten in Richtung eines Außenumfangsrands des Kettenrads (28) geneigt ist.

2. Steuerkettenmontageeinrichtung nach Anspruch 1, bei der ein Steuerkettenmontageglied (32) auf der Kurbelwelle (6) in der Nachbarschaft des Kettenrads (34) gelagert ist, wobei der Führungsvorsprung (33) an dem Steuerkettenmontageglied (32) auf der Seite des Kettenrads (28) ausgebildet ist.

3. Steuerkettenmontageeinrichtung nach Anspruch 2, bei der der Führungsvorsprung (33) einstückig mit einer Seitenfläche des Steuerkettenmontageglieds (32) auf der Seite des Kettenrads (28) ausgebildet ist.

4. Steuerkettenmontageeinrichtung nach Anspruch 2, bei der das Steuerkettenmontageglied ein auf der Kurbelwelle (6) gelagertes Hilfsmechanismus-Antriebszahnrad (32) ist.

## Revendications

1. Dispositif de montage de chaîne de distribution d'un moteur (2), dans lequel un mécanisme d'actionnement de soupape (27) est entraîné par une chaîne de distribution (31) au moyen d'un pignon d'entraînement de chaîne (28) monté sur un vilebrequin (6), le dispositif de montage de chaîne de distribution étant caractérisé en ce qu'un bossage de guidage (33) est disposé de manière adjacente audit pignon d'entraînement de chaîne (28) et ledit bossage de guidage (33) est pourvu d'une surface (33a) inclinée vers le bas, vers un bord périphérique extérieur dudit pignon d'entraînement de chaîne (28).

2. Dispositif de montage de chaîne de distribution selon la revendication 1, dans lequel un organe de montage de chaîne de distribution (32) est monté sur ledit vilebrequin (6) de manière adjacente audit pignon d'entrainement de chaîne (28) et ledit bossage de guidage (33) est formé sur l'organe de montage de chaîne de distribution (32), sur le côté du pignon d'entraînement de chaîne (28).

3. Dispositif de montage de chaîne de distribution selon la revendication 2, dans lequel ledit bossage de guidage (33) est formé d'un seul tenant sur une surface latérale de l'organe de montage de chaîne de distribution (32), sur le côté du pignon d'entraînement de chaîne (28).

4. Dispositif de montage de chaîne de distribution selon la revendication 2, dans lequel ledit organe de montage de chaîne de distribution est une roue dentée d'entraînement de mécanisme (32) auxiliaire montée sur le vilebrequin (6).
